# EUROPEAN PATENT SPECIFICATION

(11) **EP 2 918 377 B1**
(45) Date of publication and mention of the grant of the patent: **09.01.2019**
(21) Application number: 12886163.0
(22) Date of filing: 02.10.2012
(51) Int. Cl.: B25J 1/08, B25J 17/02

(54) **MANIPULATOR FOR AN ULTRA-HIGH-VACUUM CHAMBER**
MANIPULATOR FÜR EINE ULTRAHOHE VAKUUMKAMMER
MANIPULATEUR POUR CHAMBRE À ULTRA-VIDE

(43) Date of publication of application: 16.09.2015
(73) Proprietor: AVS Added Value Industrial Engineering Solutions, S.L., 20870 Elgoibar (Gipuzkoa) (ES)
(72) Inventor: GALIPIENZO HUGUET, Julio, 20870 Elgoibar (Gipuzkoa) (ES); CARRERA ASTIGARRAGA, Miguel Ángel, 20870 Elgoibar (Gipuzkoa) (ES); FERRER FÁBREGAS, Salvador, 20870 Elgoibar (Gipuzkoa) (ES); VALVIDARES SUÁREZ, Secundino Manuel, 20870 Elgoibar (Gipuzkoa) (ES)
(74) Representative: Balder IP Law, S.L.
(86) International application number: PCT/ES2012/070680
(87) International publication number: WO 2014/053670

(56) References cited:
- EP-A1- 1 037 557
- FR-A- 1 482 945
- GB-A- 1 502 972
- GB-A- 2 198 796
- JP-A- 2002 103 298
- US-A- 4 797 053
- US-A- 5 538 373
- US-A1- 2010 263 471
- US-A1- 2012 048 156

## Description

### TECHNICAL FIELD

The present invention pertains to the technical field of manipulators useful for positioning objects in ultra-high vacuum chambers.

### BACKGROUND OF THE INVENTION

The ultra-high vacuum manipulator has applications such as in material tests, as well as in cyclotrons and synchrotrons. Ultra-high vacuum (UHV) means vacuums with a pressure lower than 10⁻⁷ mbar. Ultra-high vacuum is obtained in UHV chambers provided with devices that allow gases and humidity to evacuate from the inner chamber, such as extraction pumps and heaters that allow heating and baking the inside of the system at temperatures of between 100 and 400 ºC during evacuation. It is extremely important to build all the parts of the UHV chamber with materials that are resistant to the extremely low pressures and very high temperatures during baking, and moreover such materials must not release gases during the evacuation and baking processes, or during the use of the UHV chamber. To prevent gases from being released during the use of the UHV chamber, the tank walls may be cooled by using liquid nitrogen.

In order to arrange objects inside the UHV chamber, manipulators that include a sample carrier are used. For some applications, the objects must be arranged on variable positions, in which case the manipulator comprises a movement system, which is actuated manually and/or by means of one or more motors and which is capable of positioning the sample carrier in the desired positions. To achieve this positioning, the movement system may be a mechanical coupling that is resistant to the UHV pressure through the tank wall, and able to confer rotational or linear movements, or combinations of the same. The parts of the manipulator that are in direct contact with the inside of the tank must conveniently fulfil the same requirements with regard to resistance to the baking temperature, UHV pressure and release of gases as the UHV chamber itself. Moreover, the other parts must also conveniently be capable of resisting relatively high temperatures (approximately 80 ºC), which are transmitted from the UHV chamber during baking.

Patent US6019008A describes a manipulator for UHV chambers which comprises an annular proximal base that can be securely anchored externally around an access opening of a tank comprising the ultra-high vacuum chamber, a distal base connected to the proximal base by means of a bellows element with an inner space communicated with the ultra-high vacuum chamber through the access opening, and a sample-carrying column attached to the distal base and that passes through said inner space of the bellows element and dimensioned to extend through the proximal base and the access opening of the ultra-high vacuum chamber, wherein the sample carrier may be axially moved inside the bellows. The telescopic structure is exposed to the vacuum and baking conditions of the UHV chamber.

Patent application EP0191648A2 describes a manipulator for UHV chambers of the aforementioned type in which the sample-carrying column may be axially moved and rotated inside the bellows.

Patent application EP0983826A2 describes a manipulator for UHV chambers of the aforementioned type, wherein the movement system allows providing the sample carrier with rotational, axial and tilting movements. Part of the tilting mechanism is located close to the sample carrier, that is, therefore it is exposed to the vacuum and baking conditions of the UHV chamber.

These manipulators of the state of the art essentially only allow the sample carrier to move with very few degrees of freedom and, in the case of the patent application EP0983826A2, which allows the sample carrier to be tilted, they carry moving elements directly or indirectly exposed to the vacuum and baking conditions of the UHV chamber, which further entails difficulties in precisely controlling the position of the sample carrier.

Patent applications GB-A-1502972 and FR-A-1482945 disclose further manipulators for UHV chambers comprising an annular proximal base and a distal base connected by means of a bellows element, wherein a sample-carrying column is guided through the distal base and wherein the distal base is tilted by means of actuators connected to the proximal base and to the distal base.

### DESCRIPTION OF THE INVENTION

The object of the present invention is to overcome the drawbacks of the state of the art by means of a manipulator for an ultra-high vacuum chamber comprising an annular proximal base that can be securely anchored externally around an access opening of a tank of the ultra-high vacuum chamber, a distal base connected to the proximal base by means of a bellows element with an inner space in communication with the ultra-high vacuum through the access opening, a sample-carrying column attached to the distal base and that passes through said inner space of the bellows element and dimensioned to extend through the proximal base and said access opening to the ultra-high vacuum chamber, as well as a movement system for moving the distal base in relation to the proximal base, wherein
the movement system comprises six actuators actuated by respective electric motors radially arranged around the bellows element and connected to the proximal base in an articulated manner by means of respective proximal ball joints and connected to the distal base in an articulated manner by means of respective distal ball joints; and wherein the bellows element comprises a vacuum bellows comprising convolutions.

These features of the manipulator allow the sample-carrying column to be moved efficiently and, therefore, the sample carrier, with five degrees of freedom, in a simple and stable manner and without needing to arrange moving elements inside the ultra-high vacuum (UHV) chamber, by means of the movement of the positions of each actuator between its retracted position and its extended position, which provides complete versatility regarding the positioning of the object inside the ultra-high vacuum chamber.

The term 'comprises' and its variations (such as 'comprising', etc.) should not be construed in an exclusive sense, i.e. these do not exclude the possibility of the inclusion of other elements, steps, etc. in that which is described. On the other hand, in the context of the present invention, the terms 'proximal' and 'proximally' are used in this description and in the appended claims to define positions or parts of elements closest to the ultra-high vacuum chamber, whilst the terms 'distal' and 'distally' are used in this description and the appended claims to define positions or parts of elements furthest from the ultra-high vacuum chamber.

Preferably, the proximal ball joints are radially arranged in outer radial points than the distal ball joints. Also preferably, the movement system may comprise three pairs of actuators arranged around the bellows element. The actuators of each pair of actuators are connected to the proximal base in an articulated manner by a pair of proximal ball joints separated from each other by a first angular distance and to the distal base by a pair of distal ball joints separated from each other by a second angular distance, which is greater than said first angular distance.

The pairs of distal ball joints and/or the proximal ball joints may be angularly equidistant from each other, and the actuators of each pair of actuators may be coupled to each other by an anti-rotation connecting rod that prevents the actuators from rotating around the axial shaft thereof.

Each proximal ball joint may comprise a proximal spherical bearing arranged on the proximal base and a proximal spherical head element mounted on one of the actuators. In turn, each distal ball joint may comprise a distal spherical bearing arranged on the distal base and a distal spherical head element mounted on this actuator. This type of ball joint is ideal for guaranteeing a better repeatability of movements, as well as guaranteeing rigidity and facilitating the programming of the software, since the pivot point is known and the same for all the rotations.

The distal base may comprise an outer periphery with three flanges radially protruding and angularly equidistant from each other, in such a way that the actuators of each pair of actuators may be connected in an articulated manner to one of the three flanges by means of a pair of distal ball joints.

The manipulator may be provided with an annular adaptor flange, which is anchored to the annular proximal base and may be anchored around the access opening of the tank. The use of this flange avoids the need to make additional fastening holes in the tank, and allows the mechanical interface of the hexapod to be adapted to each application, thus providing it with greater versatility. Furthermore, the manipulator may be mounted on different tank models by means of specific adaptor flanges.

The bellows element is designed to resist the ultra-high vacuum conditions present in the ultra-high vacuum chamber without leaks and without risk of implosion, and in addition, it must resist the heat conditions of baking. The number of convolutions of the bellows element shall depend on the range of motion of the distal base with regard to the proximal base of the manipulator.

The bellows element may comprise a proximal annular base connected to the proximal base and a distal annular flange connected to the distal base. Preferably, the proximal annular flange has a proximal diameter greater than the distal annular flange. The bellows element may further comprise a proximal part connected to the proximal annular flange and a distal part connected to the distal annular flange. The proximal part, the distal part and the bellows element are connected to one another by means of a dividing ring.

In an especially preferred embodiment, this dividing ring comprises a proximal annular section connected to the proximal part of the bellows element and a distal annular section connected to the distal part of the bellows element. The proximal annular section has a greater diameter than the distal annular section. Alternatively or complementarily, the bellows element may be at least partially frustoconical. According to this especially preferred embodiment, the periphery of the distal base may have a smaller diameter than the annular proximal base, which allows housing the distal ball joints in the smallest diameter possible, which allows the space needed to arrange the manipulator to be reduced and, if applicable, prevent interferences and collisions with the other elements, such as the cryomanipulator, which is in the same part of the tank, such as the top plate of the tank for example. The fact that the bellows element has a proximal section with a greater diameter than the distal section enables greater tilting angles, i.e. a more varied manoeuvring capacity of the manipulator, to be achieved. When present, the emerging wings allow the space needed to arrange the manipulator to be reduced even more.

With the object of preventing, in view of the ultra-high vacuum in the inner space of the bellows element, the atmospheric pressure of the surroundings from pushing the dividing ring towards the proximal flange of the bellows due to the change in cross-section from the upper to the lower section, several springs, such as three springs for example, may be mounted preferably angularly and equidistant to each other, and which join the proximal flange with the dividing ring. These springs are designed to ensure a minimum separation between the dividing ring and the proximal flange of the bellows element. In this way, the dividing ring is prevented from coming too close to the proximal flange, and from moving the proximal and distal sections of the bellows element outside the maximum and minimum range of operation.

In a preferred embodiment, the distal base of the manipulator comprises a central opening and the sample-carrying column is connected to a clamping plate mounted on the distal base to seal said central opening.

In accordance with the invention, each actuator preferably comprises an electric motor with a drive shaft connected to a reduction gear, a ball screw coupled proximally to the reduction gear, and a distal fixed nut on which the ball screw rotates, a hollow, outer moving body and a hollow, inner fixed body. Appropriate electrical motors may be, for example, those marketed by the group of companies FAULHABER with the name FAULHABER STEPPER AM1020.

The hollow, outer moving body has an inner axial passage in which the nut of the ball screw is immobilized, which may be of the EICHENBERGER brand, a distal end on which the distal spherical head element is mounted and an open proximal end. The outer moving body may comprise an insert piece screwed into the distal end of the outer moving body.

The outer moving body is axially slidable over the inner moving body on longitudinal guide rails, which may be of the brand IKO, between an extended position and a retracted position by action of the ball screw that, when it rotates, it moves the fixed nut that pulls the outer moving body.

The guide rails may be provided with at least two opposite outer faces of the inner fixed body. These guide rails guide runners that are in contact with the inner faces of the inner axial passage of the outer moving body, which are facing the outer faces of the inner fixed body. This rail and runner system enables the outer moving body to move in relation to the inner fixed body.

In one embodiment of the invention, in each guide rail there is a pair of preloaded recirculating ball screw runners, with a U-shaped transversal cross-section that surround the top and sides of the rail. The runners are arranged one after another in the axial direction and separated axially from each other by a predetermined distance based on the path of the outer moving body between its retracted position and its extended position. The pairs of runners are immobilized in respective axial recesses provided in the opposite inner faces of the outer moving body.

With the purpose of aligning and guaranteeing the position of the guide rails, each one of them may be arranged on the corresponding outer face of the inner fixed body with the longitudinal sides thereof tightened between an axial step made in said outer face and an immobilisation wedge that is screwed into a complementary axial slot that extends along the length of the corresponding guide rail. Thus, it is guaranteed that the guide rail is always in contact with the axial step, and that at no point during the screwing phase does the guide rail become detached from said step.

On the other hand, in order to align and guarantee the position of the outer moving body in relation to the inner fixed body, a tightening system may be provided that holds the respective longitudinal sides of the runners of one of the pairs of runners between a side reference face of the axial recess of the outer moving body and a plurality of studs threaded in through-holes, which are aligned parallel to the sides of the runners, and the tightening of which on the respective sides of the corresponding runners pushes the opposite sides towards the reference face of the axial recess of the outer moving body. In order to prevent overrestrictions, the pair of runners provided in the axial recess of the opposite side of the outer moving body is not provided with such a tightening system, such that the sides of the runners of this other pair of runners are arranged on said opposite axial recess with a certain lateral looseness.

The hollow, inner fixed body is at least partially inserted into the inner axial passage of the outer moving body, and comprises a proximal end on which said proximal spherical head is mounted, a distal end facing the fixed nut, and an axial cavity that extends between the proximal end and the distal end of the hollow inner body, and on which the electric motor and the reduction gear are mounted.

The ball screw may comprise a connection shaft coupled, by means of a flexible coupling that may be of the brand R+W, to an output shaft of the reduction gear and guided in at least one bearing element selected from angular bearings and radial ball bearings, arranged on the axial cavity of the inner fixed body. The bearing element may comprise a packet of preloaded angular bearings comprising a sleeve in which two bearing brackets for compressive stress and one bearing bracket for tensile stress are housed.

The connection shaft of the ball screw and the output shaft of the reduction gear may have respective flat faces and are coupled to each other by means of a flexible coupling comprising a stud aligned with said flat faces. In order to align the flat faces of the output shaft of the reduction gear with the stud, the drive shaft of the electric motor comprises a proximal axial extension on which a gear is mounted that enables the drive shaft to rotate. In this way, the shaft is prevented from rotating in the opposite direction, i.e., by applying torque from the output of the reduction gear to the motor, which could damage the reduction gear.

In accordance with the invention, each actuator may be linked to a sensing device to detect positions of the actuator between said extended position and said retracted position. The sensing device is an absolute optical encoder mounted on a notch on a wall of the outer moving body facing a longitudinal ruler fixed to an outer face of the inner fixed body. Suitable encoders and rulers may be, for example, those marketed by the group of companies RENISHAW with the designations RL26BAT050B50F RESOLUTE, BISS LINEAL 26B, 1VPP (encoder) and A-9763-0005 (stainless steel ruler), respectively.

The control of these elements can be made, for example, by a UMAC Turbo Controller 3U, 32 controller card with axis controller with 100 Mbit Ethernet card and USB2.0, 2 ACC-24E2S cards for the connection of stepper motor controllers, an ACC-R2 12-slot rack, 2 ACC-84e cards for the connection of Biss-C encoders and the software ACC-9WPR02 marketed by the company DELTA TAU.

### BRIEF DESCRIPTION OF THE DRAWINGS

In order to complement the description and with the object of helping to a better understanding of the features of the invention, according to a preferred example of practical embodiment of the same, a set of drawings is attached as an integral part of the description, wherein by way of illustration and without limitation, the following has been represented:
Figure 1 is a top perspective view of an embodiment of the manipulator according to the present invention in its resting position and arranged on a tank of an ultra-high vacuum chamber.
Figure 2 is a perspective view of the manipulator shown in figure 1.
Figure 3 is a sectional perspective view of the manipulator shown in figures 1 and 2.
Figure 4 is a sectional perspective view of the manipulator shown in figures 1 and 2 in a displaced position.
Figure 5 is a top perspective view of an embodiment of the adaptor flange of the manipulator shown in figure 3.
Figure 6A is a perspective view of the bellows element shown in figures 1 to 4.
Figure 6B is a perspective view of an alternative embodiment of the bellows element that can be applied to the manipulator shown in figures 1 to 4.
Figure 7 is a schematic view of an embodiment of the basic features of an actuator for a manipulator according to the invention.
Figure 8 is a sectional side view of the detailed model of the actuator shown comprising the basic features of the actuator shown in figure 7.
Figure 9 is a sectional side view of the actuator, along a plane perpendicular to the section used in figure 8.
Figure 10 is a view of the detail A marked in figure 9.

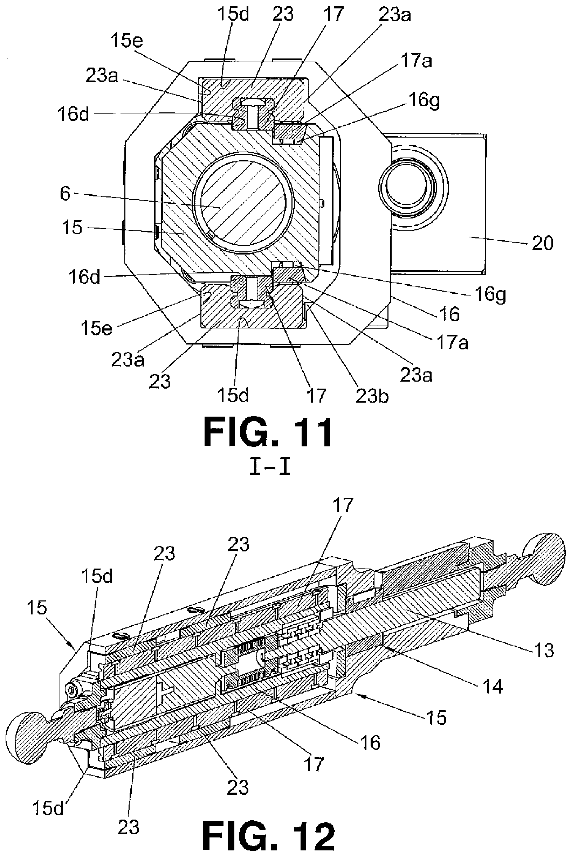

Figure 11 is a cross section view along the line I-I of the actuator shown in figure 8.
Figure 12 is a sectional distal perspective view of the actuator shown in figure 8.

These figures have numerical references identifying the following elements
- 1: manipulator
- 1a: proximal base
- 1b: distal base
- 1c: wings
- 1d: through-hole
- 1e: centring drill
- 1f: central opening
- 2: tank
- 2a: access opening
- 2b: top plate of tank
- 2c: cap
- 3: bellows element
- 3a: inner space
- 3b: proximal annular flange
- 3c: distal annular flange
- 3d: proximal part
- 3e: distal part
- 4: sample-carrying column
- 4a: clamping plate
- 5: actuators
- 6: electric motor
- 6a: drive shaft
- 6b: proximal axial extension
- 7: proximal ball joint
- 7a: proximal spherical bearing
- 7b: proximal spherical head element
- 7c: threaded shaft
- 8: distal ball joint
- 8a: distal spherical bearing
- 8b: distal spherical head element
- 8c: threaded shaft
- 9: anti-rotation connecting rod
- 9a: axial slot
- 9b: coupling pin
- 10: annular adaptor flange
- 10a: threaded blind hole
- 10b: through holes
- 10c: first centring holes
- 10d: second centring holes
- 11: dividing ring
- 11a: proximal annular section
- 11b: distal annular section
- 11e: spring
- 11d: connector arm
- 11e: connecting block
- 12: reduction gear
- 12a: output shaft
- 13: ball screw
- 13a: connection shaft
- 13b: rotatable bushing
- 14: distal fixed nut
- 15: outer moving body
- 15a: inner axial passage
- 15b: distal end
- 15c: open proximal end
- 15d: guide axial recess
- 15e: reference side wall
- 16: inner fixed body
- 16a: proximal end
- 16b: a distal end
- 16c: axial cavity
- 16d: axial step
- 16e: guide axial channel
- 16f: proximal insert
- 16g: complementary axial slot
- 17: guide rails
- 17a: immobilization wedge
- 18: annular bearing element
- 18a: bearing bracket for compressive stress
- 18b: bearing bracket for tensile stress
- 18c: sleeve
- 18d: proximal nut
- 18e: distal nut
- 19: coupling
- 20: sensing device
- 21: longitudinal ruler
- 22: distal insert
- 23: runner
- 23a: side of the runner
- 23b: stud
- 24: pinion
- 25: cryomanipulator
- 26: first sealing rings
- 27: proximal sealing ring
- 28: mechanical stop

### MODES FOR CARRYING OUT THE INVENTION

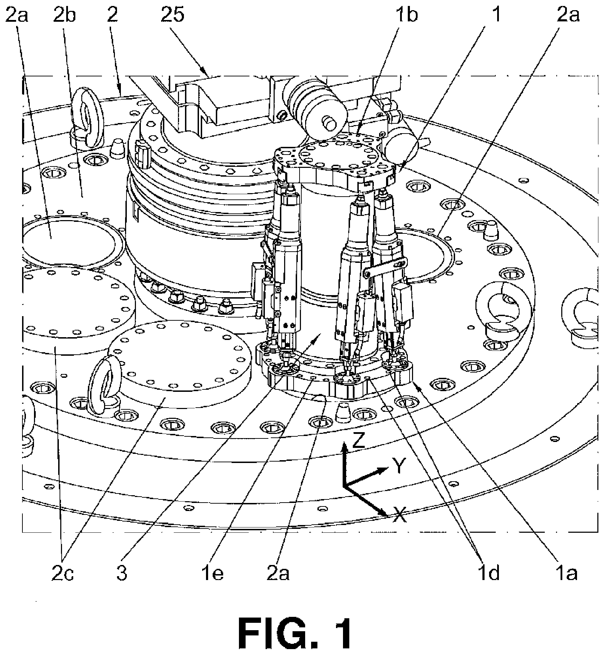

Figure 1 shows one embodiment of the manipulator -1- for an ultra-high vacuum chamber externally mounted around one of several access openings-2a-, which may be DN100 ports, provided on a top plate -2b- of a tank -2- of the ultra-high vacuum chamber and which can be used to couple other conventional devices to the top plate. The access openings -2a- that are not used can be closed by means of caps -2c- attached on the top plate -2b- by means of screws. A cryomanipulator -25- is also provided in the centre of the top plate-2b- in a conventional manner.

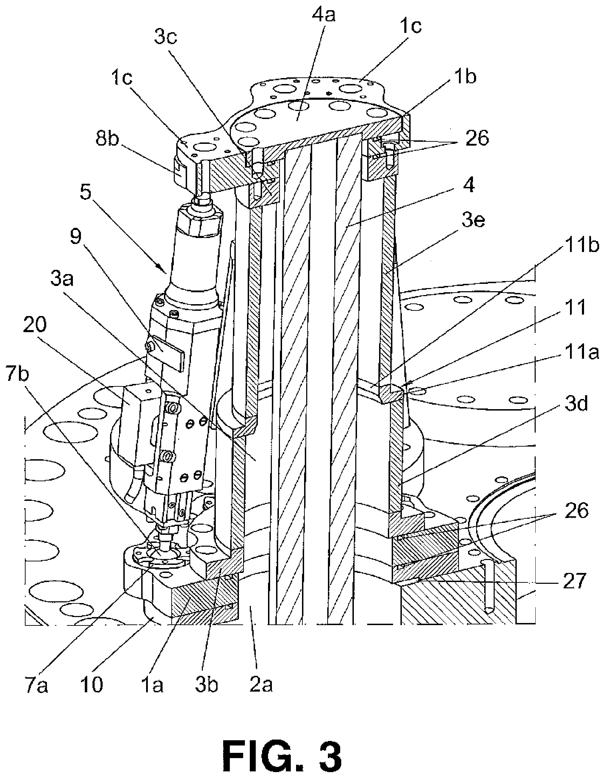

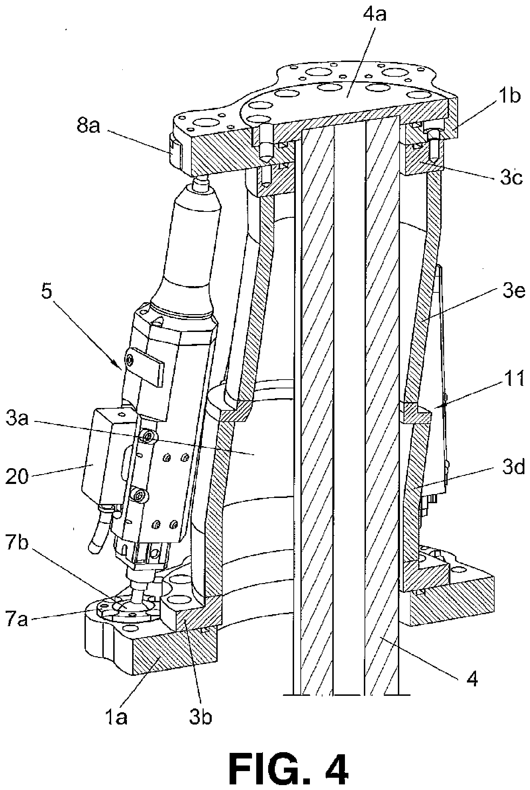

The manipulator -1- comprises an annular proximal base -1a- that can be securely anchored externally around the access opening -2a- of the top plate-15b- of the tank -2- of the ultra-high vacuum chamber, a distal base -1b-, a sample-carrying column -4- (figures 3, 4), and a movement system for moving the distal base -1b- in relation to the proximal base comprising six actuators -5- each one actuated by respective electric motors -6- radially arranged around the bellows element -3- and connected to the proximal base -1a- in an articulated manner by means of respective proximal ball joints -7- and connected to the distal base -1b- in an articulated manner by means of respective distal ball joints -8-. The distal base -1b- is connected to the proximal base -1a- by means of a convolution bellows element -3- with an inner space-3a- in communication with the ultra-high vacuum chamber through the access opening -2a-. The sample-carrying column -4- is attached to the distal base -1b- and passes through said inner space -3a- of the bellows element -3- dimensioned to extend through the proximal base -1a- and said access opening -2a- to the ultra-high vacuum chamber.

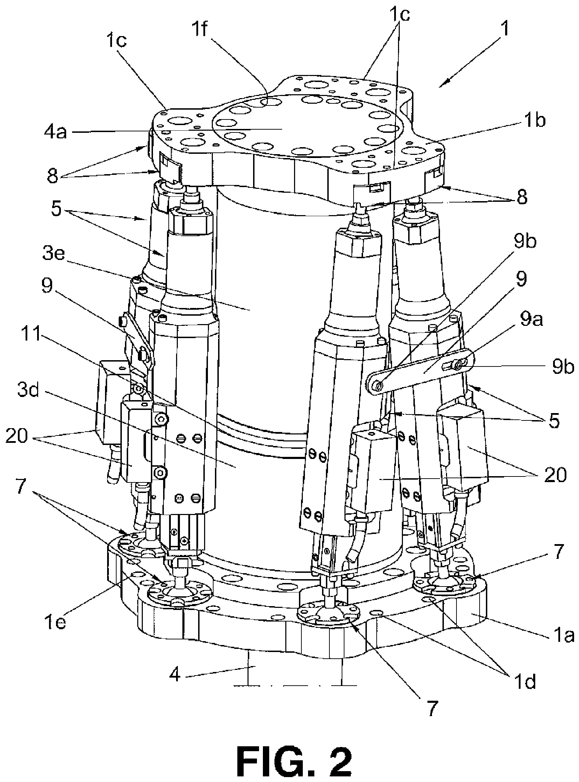

As can be seen in more detail in figures 2 to 4, the proximal ball joints -7- are radially arranged in outer radial points than the distal ball joints -8-. Each proximal ball joint -7- comprises a proximal spherical bearing -7a- arranged on the proximal base -1a- and a proximal spherical head element -7b- with a threaded shaft -7c- mounted on one of the actuators -5-, and each distal ball joint -8- comprises a distal spherical bearing -8a- arranged on the distal base - 1b- and a distal spherical head element -8b- with a threaded shaft -8c- mounted on the actuator -5-.

The actuators -6- are grouped into three pairs of actuators -6- arranged around the bellows element -3-. In order to prevent the actuators -5- from rotating around the axial shaft thereof, the actuators -5- of each pair of actuators -5- are coupled to each other by an anti-rotation connecting rod -9- preferably made of resiliently flexible plastic material. The anti-rotation connecting rod -9- comprises, on one end, an axial slot -9a-, and on the opposite end a coupling hole. The anti-rotation connecting rod -9- is coupled to the actuators -5- forming the pair of actuators by means of respective coupling pins -9b- emerging from the outer faces of the actuators and which respectively pass through the coupling hole and the axial slot -9a-, such that the anti-rotation connecting rod-9- can rotate in the respective coupling pins -9b- while it can slide in one of the coupling pins -9b-.

The actuators -5- of each pair of actuators -5- are connected in an articulated manner to the proximal base -1a- by a pair of proximal ball joints -7- separated from each other by a first angular distance and to the distal base -1b- by a pair of distal ball joints -8- separated from each other by a second angular distance, which is greater than said first angular distance. The pairs of distal ball joints -8- are angularly equidistant from each other, and are located respectively on one of three equidistant wings -1c- protruding radially from the outer periphery of the distal base -1b-. In turn, the pairs of proximal ball joints -7- are angularly equidistant from each other, but with separation angles between pairs of ball joints that are different and greater than those of the distal ball joints -8-.

The annular proximal base -1a- of the manipulator -1- is anchored in an annular adaptor flange -10- by means of screws traversing through-holes -1d- of the annular proximal base -1a-. The annular proximal base -1a- also comprises two diagonally opposite centring drills -1e-. In turn, the distal base -1b- comprises a central opening -1f- and the sample-carrying column -4- is attached to a clamping plate -4a- mounted on an annular step surrounding the central opening -1f- to seal the central opening -1f-.

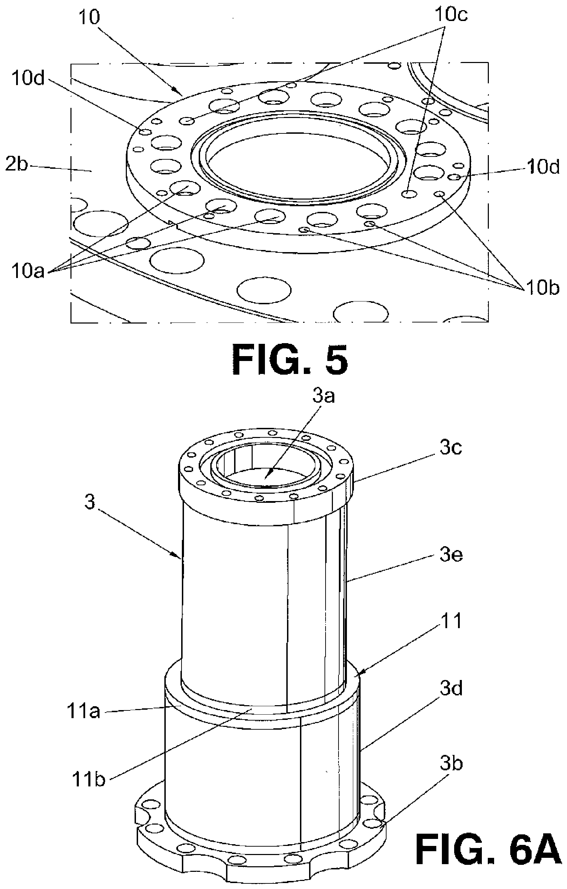

As can be seen in figure 5, this adaptor flange -10- comprises a plurality of radial drill holes for accommodating screw head -10a- , to fasten the annular adaptor flange -10- to the top plate -2b, of the tank; a plurality of peripheral through holes -10b- through which the proximal base -1a- is fastened to the adaptor flange -10, as well as two diagonally opposite first centring holes -10c-, used for centring the adaptor flange -10- with the top plate -2b- and two diagonally opposite second centring holes -10d-, used for centring the proximal base -1a- with the annular adaptor flange -10-.

Respective second pins are inserted in the second centring holes -10d- to mount the annular proximal base -1a- on the adaptor flange -10-. The pins are aligned with the centring drills -10e- and the annular proximal base -1a- is placed over the adaptor flange -10-. Next, and through the second through-holes -1d- of the annular proximal base -1a-, screws are inserted and screwed (not shown in the figures) in the blind threaded holes -10b- of the adaptor flange -10-, such that the annular proximal base -1a- is firmly bolted to the adaptor flange -10-.

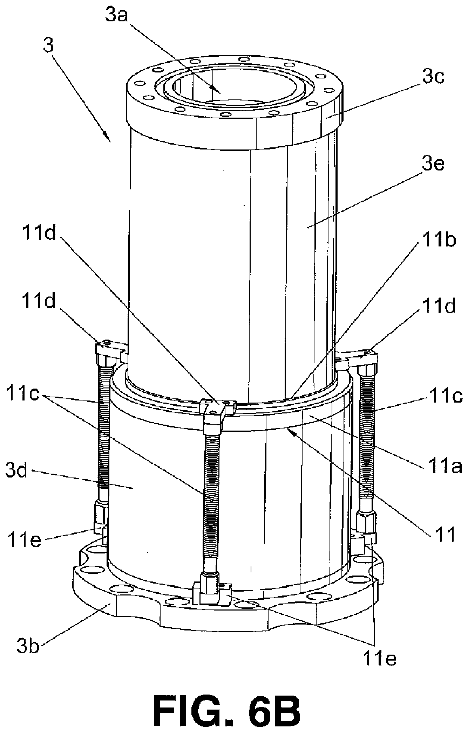

In the embodiment shown in figures 1 to 4, 6A and 6B, the bellows element -3- comprises a proximal annular flange -3b- bolted to the proximal base -1a- and a distal annular flange -3c- bolted to the distal base -1b-. Specifically, the bellows element -3- comprises a cylindrical proximal part -3d- connected to the proximal annular flange -3b- and a cylindrical distal part -3e- connected to the distal annular flange -3c-. The proximal part -3d- and the distal part -3e- of the bellows element are connected to one another by means of a dividing ring -11- comprising a proximal annular section -11a- attached to the proximal part -3d- of the bellows element -3- and a distal annular section -11b- connected to the distal part -3e- of the bellows element -3-. The distal annular section -11b- has a smaller diameter than the proximal annular section -11a-. In the embodiment of the bellows element -3- shown in figure 6B, the dividing ring -11- and the proximal flange -3b- of the bellows element -3- are connected to one another by means of three helical springs -11c- which prevent, in view of the ultra-high-vacuum existing in the inner space -3a- of the bellows element -3- , the atmospheric pressure of the environment from pushing the dividing ring-11- towards the proximal flange -3b- of the bellows element, due to the section change from the distal to the proximal section. The springs -11c- are coupled at their distal ends to respective connector arms -11d- that emerge radially from the perimeter of the dividing ring -11- and at their proximal ends to respective connecting blocks -11e- attached to the proximal flange -3b-. The springs -11c- are designed to ensure a minimum separation between the dividing ring -11- in relation to the proximal flange -3b-, and preventing the dividing ring -11- from getting too close to the proximal flange -3b- and moving the proximal section-3d- and the distal section -3e- of the bellows element -3- outside the maximum and minimum range of operation.

First respective sealing rings are arranged in respective annular slots between the tightening plate -4a- and the annular step surrounding the central opening -1f- on the distal base -1b-, between the distal base -1b- and the distal flange -3c- of the bellows -3-, between the proximal flange -3b- and the annular proximal base -1a-, and between the annular proximal base -1a- and the adaptor flange -10-. These first sealing rings may be HELICOFLEX sealing rings marketed by TECHNETICS GROUP. In turn, a proximal sealing ring -27- of DN100 ISO CF type is arranged between the adaptor flange -10- and the top plate -2b- of the tank -2-.

As can be seen by comparing the positions shown in figures 2, 3, and 4, by varying the positions of each actuator -5- between its retracted position and its extended position, the sample-carrying column and, therefore, the sample carrier (not shown in the figures), can move with five degrees of freedom, since the rotation around the vertical axis is restricted by the limitation of rotation of the bellows. The number of convolutions of the bellows element -3- will depend on the range of motion of the distal base -1b- in relation to the proximal base-1a- of the manipulator -1-.

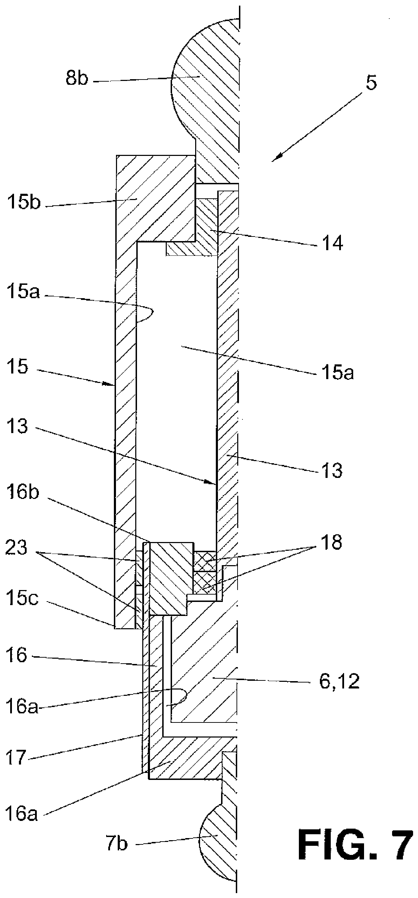

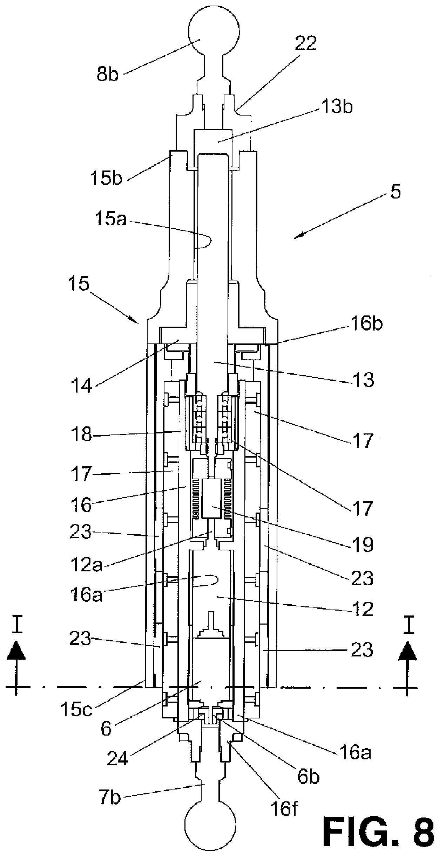

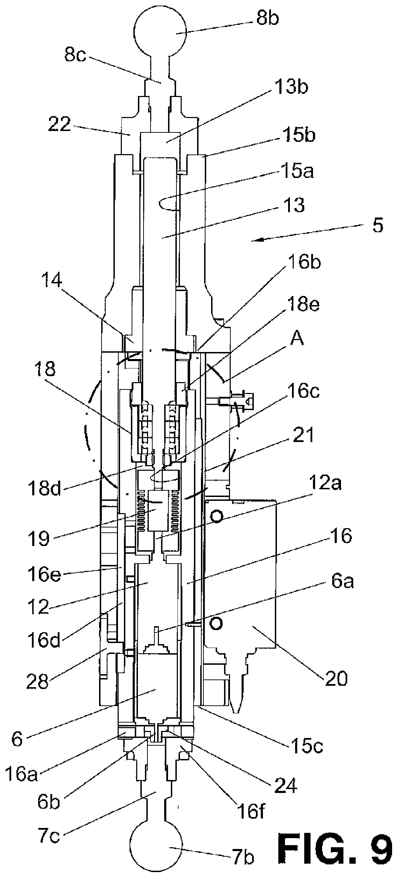

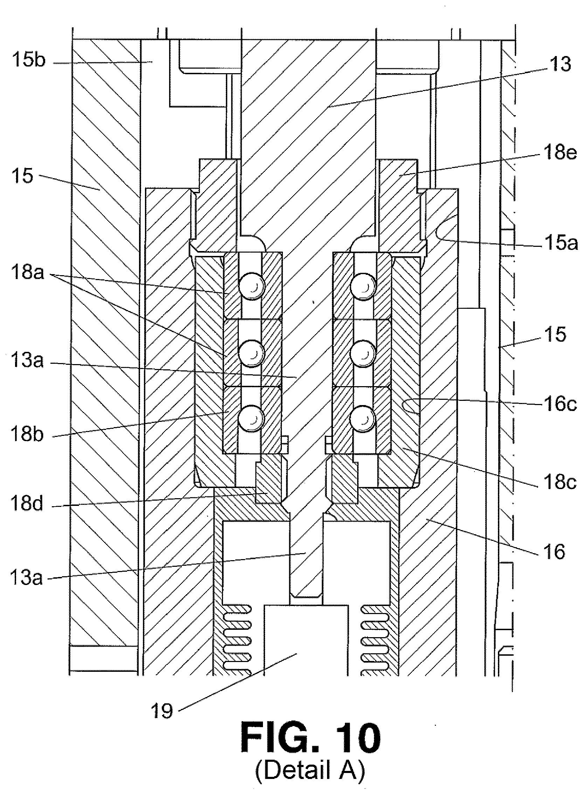

In the embodiment shown in figures 7 to 10, the actuator -5- comprises an electric motor -6- with a drive shaft -6a- connected to a reduction gear -12-, a ball screw -13- coupled proximally to the reduction gear -12-, and a fixed distal nut -14- in which the ball screw -13- rotates, an outer moving body -15- and an inner fixed body -16-.

The hollow outer moving body -15- has an inner axial passage -15a- in which the fixed nut is immobilized -14-, a distal end -15b- on which the distal spherical head element -8b- is mounted and an open proximal end -15c-. The distal spherical head element -8b- is mounted on an insert -22- threaded on the distal end -15b- of the outer moving body -15- and in which, in turn, the threaded shaft -8c- of the distal spherical head element -8- is threaded.

The hollow inner fixed body -16- is at least partially inserted into the inner axial passage -15a- of the outer moving body -15-, and comprises a proximal end -16a- to which an proximal insert -16f- is fastened, bolted to the proximal end -16a- of the inner fixed body -16- and centred by adjustment diameter, in which the rod -7c- of the proximal spherical head -7b- is threaded, a distal end-16b- facing the fixed nut -14-, and an axial cavity -16c- that extends between the proximal end and the distal end of the hollow inner body, and on which the electric motor -6- and the reduction gear -12- are mounted.

The outer moving body -15- is axially slidable over the inner moving body -16- on longitudinal guide rails -17-, between an extended position and a retracted position by action of the ball screw -13- that, when it rotates, moves the fixed nut -14- that pulls the outer moving body -15-. The displacement between said positions is limited by a mechanical stop -28- fixed on the outer moving body -15- and with a protrusion that moves on a guide axial channel-16e- provided in an outer face of the inner fixed body -16- when the outer moving body moves with respect to the inner fixed body -16-. The guide axial channel -16e- has a longitudinal extension which delimits the path of the protrusion of the mechanical stop -28- and, therefore of the displacement of the outer moving body -15- with respect to the inner fixed body -16-.

The guide rails -17- are arranged on at least two opposite outer faces of the inner fixed body -16-, and guide runners -23- contacting inner faces of the inner axial passage -15a- of the outer moving body -15- facing the outer faces of the inner fixed body -16-, and are arranged on opposite side outer faces of the inner fixed body.

In each guide rail -17- a pair of preloaded recirculating ball screw runners -23- is guided, with a U-shaped transversal cross-section that surround the top and sides of the guide rail -17-. The runners -23- are arranged one after another in the axial direction and axially separated from each other by a predetermined distance based on the path of the outer moving body 15- between its retracted position and its extended position. The pairs of runners -23-are immobilized in respective axial recesses -15d- provided in the opposite inner faces of the outer moving body-15-.

With the purpose of aligning and guaranteeing the position of the guide rails -17-, each one of them may be arranged on the corresponding outer face of the inner fixed body -16- with the longitudinal sides thereof tightened between an axial step -16d- made in said outer face and an immobilisation wedge -17a- that is screwed into a complementary axial slot -16g- that extends along the length of the corresponding guide rail -17-. Thus, it is guaranteed that the guide rail -17- is always in contact with the axial step -16d-, and that at no point during the screwing phase does the guide rail -17- become detached from said step-16d-.

Likewise, in order to align and guarantee the position of the outer moving body -15- in relation to the inner fixed body -16-, a tightening system may be provided that holds the respective longitudinal sides of the runners -23a- of one of the pairs of runners -23- between a side reference face -15e- of the axial recess -15d- of the outer moving body -15- on which respective sides -23a- of one face of the runners -23- are supported, and a plurality of studs -23b- threaded in through-holes, which are aligned parallel to the respective opposite sides of the runners -23-. The tightening of these studs -23b- on the respective sides of the runners -23- pushes the other side of the runner towards the reference wall -15e- of the axial recess -15d- of the outer moving body -15-. In order to prevent over restricting, the pair of runners -23- provided in the axial recess -15d- of the opposite side of the outer moving body -15- is not provided with such a tightening system, such that the sides -23a- of the runners -23- of this other pair of runners are arranged on said opposite axial recess -15d- with a certain lateral looseness.

The ball screw -13- comprises a connection shaft -13a- coupled to an output shaft -12a- of the reduction gear -12- and guided in at least one annular bearing element -18- arranged on the axial cavity -16c- of the inner fixed body-16- and in a distal rotatable bushing -13b- mounted on the distal insert -22-. The connection shaft -13a- of the ball screw -13- and the output shaft -12a- of the reduction gear -12- have respective flat faces and are coupled to each other by means of a coupling -19- comprising a stud aligned with said flat faces. The drive shaft -6a- of the electric motor -6- comprises a proximal axial extension-6b- on which a gear is mounted -24- that allows the drive shaft to rotate -6a- to align the flat face of the output shaft -12a- of the reduction gear -12- with the stud. The packet of bearings is immobilized between a proximal nut -18d- and a distal nut -18e-.

The bearing element -18- comprises a packet of preloaded angular bearings -18a, 18b- comprising a sleeve -18c- in which two bearing brackets for compressive stress -18a- and one bearing bracket for tensile stress -18b- are housed. The sleeve protects the bearings from the studs used to immobilize the packet of bearings -18a, 18b-.

Each actuator -5- is linked to an absolute optical encoder mounted on a notch on a wall of the outer moving body facing a longitudinal ruler -21- fixed to an outer face of the inner fixed body -16- -20- to detect positions of the actuator -5- between said extended position and said retracted position.

The invention is not limited to the specific embodiments that have been described but it also includes, for example, the variants which may be carried out by the person with average skill in the art (for example, regarding the choice of materials, dimensions, components, configuration, etc.), within the scope of the appended claims.

## Claims

1. Manipulator for an ultra-high vacuum chamber comprising
an annular proximal base (1a) that can be securely anchored externally around an access opening (2a) of a tank (2) of the ultra-high vacuum chamber,
a distal base (1b) connected to the proximal base (1a) by means of a bellows element (3) with an inner space (3a) in communication with the ultra-high vacuum chamber through the access opening (2a),
a sample-carrying column (4) attached to the distal base (1b) and that passes through said inner space (3a) of the bellows element (3), dimensioned to extend through the proximal base (1a) and said access opening (2a) to the ultra-high vacuum chamber,
a movement system for moving the distal base (1b) in relation to the proximal base,
wherein
the movement system comprises six actuators (5) each one actuated by respective electric motors (6) radially arranged around the bellows element (3) and connected to the proximal base (1a) in an articulated manner by means of respective proximal ball joints (7) and connected to the distal base (1b) in an articulated manner by means of respective distal ball joints (8),
and wherein
the bellows element (3) comprises a vacuum bellows comprising convolutions.

2. Manipulator, according to claim 1, **characterized in that** the proximal ball joints (7) are radially arranged in outer radial points than the distal ball joints (8).

3. Manipulator, according to claim 1 or 2, **characterized in that**
the movement system comprises three pairs of actuators (5) arranged around the bellows element (3);
the actuators (5) of each pair of actuators (5) are connected to the proximal base (1a) in an articulated manner by a pair of proximal ball joints (7) separated from each other by a first angular distance and to the distal base (1b) by a pair of distal ball joints (8) separated from each other by a second angular distance, which is greater than said first angular distance.

4. Manipulator, according to claim 3, **characterized in that** the actuators (5) of each pair of actuators (5) are coupled to each other by an anti-rotation connecting rod (9).

5. Manipulator, according to claim 4, **characterized in that**
the distal base (1b) comprises an outer periphery with three wings (1c) protruding radially and angularly equidistant from each other;
the actuators (5) of each pair of actuators are connected in an articulated manner to one of the three wings (1c) by means of a pair of distal ball joints (8).

6. Manipulator, according to any one of claims 1 to 5, **characterized by** comprising an annular adaptor flange (10) which is anchored to the annular proximal base (1a) and may be anchored around the access opening (2a) of the tank (2).

7. Manipulator, according to any one of claims 1 to 6, **characterized in that** the bellows element (3) comprises a proximal annular flange (3b) connected to the proximal base (1a) and a distal annular flange (3c) connected to the distal base (1b).

8. Manipulator, according to claim 7, **characterized in that** the proximal annular flange (3b) has a proximal diameter greater than the distal annular flange (3c).

9. Manipulator, according to claim 8, **characterized in that**
the bellows element (3) comprises a proximal part (3d) connected to the proximal annular flange (3b) and a distal part (3e) connected to the distal annular flange (3c);
the proximal part (3d) and the distal part (3e) of the bellows element are connected to one another by means of a dividing ring (11).

10. Manipulator, according to claim 9, **characterized in that**
the dividing ring (11) comprises a proximal annular section (11a) connected to the proximal part (3d) of the bellows element (3) and a distal annular section (11b) connected to the distal part (3e) of the bellows element (3);
the proximal annular section (11a) has a diameter greater than the distal annular section (11b).

11. Manipulator, according to claim 8, 9 or 10, **characterized in that** the bellows element (3) is at least partially frustoconical.

12. Manipulator, according to any one of claims 8 to 11, **characterized in that** the dividing ring (11) and the proximal flange (3b) of the bellows element (3) are connected to one another by means of a plurality of springs (11c) designed to ensure a minimum separation between the dividing ring (11) in relation to the proximal flange (3b),

13. Manipulator, according to any one of the preceding claims, **characterized in that** the distal base (1b) comprises a central opening (1f) and the sample-carrying column (4) is connected to a clamping plate (4a) mounted on the distal base (1b) to seal said central opening (1f).

14. Manipulator, according to any one of the preceding claims, **characterized in that**
each proximal ball joint (7) comprises a proximal spherical bearing (7a) arranged on the proximal base (1a) and a proximal spherical head element (7b) mounted on one of the actuators (5); each distal ball joint (8) comprises a distal spherical bearing (8a) arranged on the distal base (1b) and a distal spherical head element (8b) mounted on this actuator (5).

15. Manipulator, according to claim 14, **characterized in that** each actuator (5) comprises
an electric motor (6) with a drive shaft (6a) connected to a reduction gear (12), a ball screw (13) coupled proximally to the reduction gear (12), and a distal fixed nut (14) on which the ball screw (13) rotates;
a hollow, outer moving body (15) with an inner axial passage (15a) in which the fixed nut (14) is immobilized, a distal end (15b) on which the distal spherical head element (8b) is mounted and an open proximal end (15c);
a hollow, inner fixed body (16) at least partially inserted into the inner axial passage (15a) of the outer moving body (15), with a proximal end (16a) on which said proximal spherical head (8b) is mounted, a distal end (16b) facing the fixed nut (14), and an axial cavity (16c) that extends between the proximal end and the distal end of the hollow inner body, and on which the electric motor (6) and the reduction gear (12) are mounted;
and **in that** the outer moving body (15) is axially slidable over the inner fixed body (16) on longitudinal guide rails (17), between an extended position and a retracted position by action of the ball screw (13) that, when it rotates, moves the fixed nut (14) that pulls the outer moving body (15).

## Patentansprüche

1. Manipulator für eine Ultrahochvakuumkammer, umfassend
eine ringförmige proximale Basis (1a), die extern um eine Zugangsöffnung (2a) eines Tanks (2) der Ultrahochvakuumkammer sicher verankert werden kann,
eine distale Basis (1b), die mittels eines Balgelements (3) mit einem Innenraum (3a), der durch die Zugangsöffnung (2a) in Verbindung mit der Ultrahochvakuumkammer steht, verbunden ist,
eine probentragende Säule (4), die an der distalen Basis (1b) befestigt ist und die durch den Innenraum (3a) des Balgelements (3) verläuft, so dimensioniert, dass sie sich durch die proximale Basis (1a) und die Zugangsöffnung (2a) zu der Ultrahochvakuumkammer erstreckt,
ein Bewegungssystem zum Bewegen der distalen Basis (1b) im Verhältnis zur der proximalen Basis,
wobei
das Bewegungssystem sechs Antriebe (5) umfasst, von denen jeder von jeweiligen elektrischen Motoren (6) angetrieben wird, die radial um das Balgelement (3) angeordnet sind, und mittels jeweiliger proximaler Kugelgelenke (7) in einer angelenkten Weise mit der proximalen Basis (1a) verbunden und mittels jeweiliger distaler Kugelgelenke (8) in einer angelenkten Weise (1b) mit der distalen Basis verbunden ist,
und wobei
das Balgelement (3) einen Schraubengänge umfassenden Vakuumbalg umfasst.

2. Manipulator nach Anspruch 1, **dadurch gekennzeichnet, dass** die proximalen Kugelgelenke (7) in weiter außen liegenden Punkten als die distalen Kugelgelenke (8) angeordnet sind.

3. Manipulator nach Anspruch 1 oder 2, **dadurch gekennzeichnet, dass**
das Bewegungssystem drei Paare Antriebe (5) aufweist, die um das Balgelement (3) angeordnet sind;
die Antriebe (5) jedes Paares von Antrieben (5) durch ein Paar proximaler Kugelgelenke (7), die durch einen ersten Winkelabstand voneinander getrennt sind, auf angelenkte Weise mit der proximalen Basis (1a) und durch ein Paar distaler Kugelgelenke (8), die voneinander durch einen zweiten Winkelabstand getrennt sind, der größer ist als der erste Winkelabstand, mit der distalen Basis (1b) verbunden sind.

4. Manipulator nach Anspruch 3, **dadurch gekennzeichnet, dass** die Antriebe (5) jedes Paares von Antrieben (5) durch eine Gegenlauf-Verbindungsstange (9) miteinander verbunden sind.

5. Manipulator nach Anspruch 4, **dadurch gekennzeichnet, dass**
die distale Basis (1b) einen äußeren Umfang mit drei Flügeln (1c) umfasst, die radial und winklig in gleichen Abständen voneinander hervorstehen;
die Antriebe (5) jedes Paares von Antrieben mittels eines Paares distaler Kugelgelenke (8) in einer angelenkten Weise mit einem der drei Flügel (1c) verbunden sind.

6. Manipulator nach einem der Ansprüche 1 bis 5, **dadurch gekennzeichnet, dass** er einen ringförmigen Adapterflansch (10) umfasst, der mit der ringförmigen proximalen Basis (1a) verankert ist und um die Zugangsöffnung (2a) des Tanks (2) verankert werden kann.

7. Manipulator nach einem der Ansprüche 1 bis 6, **dadurch gekennzeichnet, dass** das Balgelement (3) einen proximalen ringförmigen Flansch (3b), der mit der proximalen Basis (1a) verbunden ist, und einen distalen ringförmigen Flansch (3c), der mit der distalen Basis (1b) verbunden ist, umfasst.

8. Manipulator nach Anspruch 7, **dadurch gekennzeichnet, dass** der proximale ringförmige Flansch (3b) einen größeren proximalen Durchmesser als der distale ringförmige Flansch (3c) aufweist.

9. Manipulator nach Anspruch 8, **dadurch gekennzeichnet, dass**
das Balgelement (3) einen proximalen Teil (3d), der mit dem proximalen ringförmigen Flansch (3b) verbunden ist, und einen distalen Teil (3e), der mit dem distalen ringförmigen Flansch (3c) verbunden ist, umfasst;
der proximale Teil (3d) und der distale Teil (3e) des Balgelements mittels eines Trennrings (11) miteinander verbunden sind.

10. Manipulator nach Anspruch 9, **dadurch gekennzeichnet, dass**
der Trennring (11) einen proximalen ringförmigen Abschnitt (11a), der mit dem proximalen Teil (3d) des Balgelements (3) verbunden ist, und einen distalen ringförmigen Abschnitt (11b), der mit dem distalen Teil (3e) des Balgelements (3) verbunden ist, umfasst;
der proximale ringförmige Abschnitt (11a) einen größeren Durchmesser als der distale ringförmige Abschnitt (11b) aufweist.

11. Manipulator nach einem der Ansprüche 8, 9 oder 10, **dadurch gekennzeichnet, dass** das Balgelement (3) wenigstens teilweise kegelstumpfförmig ist.

12. Manipulator nach einem der Ansprüche 8 bis 11, **dadurch gekennzeichnet, dass** der Trennring (11) und der proximale Flansch (3b) des Balgelements (3) mittels einer Mehrzahl Federn (11c) miteinander verbunden sind, die ausgebildet sind, um eine minimale Trennung zwischen dem Trennring (11) im Verhältnis zu dem proximalen Flansch (3b) sicherzustellen.

13. Manipulator nach einem der vorstehenden Ansprüche, **dadurch gekennzeichnet, dass** die distale Basis (1b) eine mittige Öffnung (1f) umfasst und die probentragende Säule (4) mit einer Klemmplatte (4a) verbunden ist, die an der distalen Basis (1b) angebracht ist, um die mittige Öffnung (1f) abzudichten.

14. Manipulator nach einem der vorstehenden Ansprüche, **dadurch gekennzeichnet, dass**
jedes proximale Kugelgelenk (7) ein an der proximalen Basis (1a) angeordnetes Pendellager (7a) und ein an einem der Antriebe (5) angebrachtes proximales Kugelkopfelement (7b) umfasst; jedes distale Kugelgelenk (8) ein an der distalen Basis (1b) angeordnetes distales Pendellager (8a) und ein an diesem Antrieb (5) angebrachtes distales Kugelkopfelement (8b) umfasst.

15. Manipulator nach Anspruch 14, **dadurch gekennzeichnet, dass** jeder Antrieb (5) umfasst:
einen elektrischen Motor (6) mit einer mit einem Untersetzungsgetriebe (12) verbundenen Antriebswelle (6a), einer proximal mit dem Untersetzungsgetriebe (12) gekoppelten Kugelumlaufspindel (13) und einer distalen festen Mutter (14), auf der die Kugelumlaufspindel (13) rotiert;
einen hohlen äußeren sich bewegenden Körper (15) mit einem inneren axialen Durchgang (15a), in dem die feste Mutter (14) unbeweglich ist, einem distalen Ende (15b), auf dem das distale Kugelkopfelement (8b) angebracht ist, und einem offenen proximalen Ende (15c);
einen hohlen inneren stationären Körper (16), der zumindest teilweise in den inneren axialen Durchgang (15a) des äußeren sich bewegenden Körpers (15) eingeführt ist, mit einem proximalen Ende (16a), an dem der proximale Kugelkopf (8b) angebracht ist, einem distalen Ende (16b), das der festen Mutter (14) zugewandt ist, und einem axialen Hohlraum (16c), der sich zwischen dem proximalen Ende und dem distalen Ende des hohlen inneren Körpers erstreckt und an dem der elektrische Motor (6) und das Untersetzungsgetriebe (12) angebracht sind;
und dass der äußere sich bewegende Körper (15) durch die Wirkung der Kugelumlaufspindel (13), die, wenn sie sich dreht, die feste Mutter (14) bewegt, die den äußeren sich bewegenden Körper (15) zieht, auf längsstehenden Führungsschienen (17) axial zwischen einer ausgefahrenen Position und einer eingezogenen Position über den inneren stationären Körper (16) schiebbar ist.

## Revendications

1. Manipulateur pour une enceinte à vide très poussé comprenant
une base proximale annulaire (1a) qui peut être ancrée solidement depuis l'extérieur autour d'une ouverture d'accès (2a) d'un réservoir (2) de l'enceinte à vide très poussé,
une base distale (1b) reliée à la base proximale (1a) au moyen d'un élément à soufflet (3) ayant un espace intérieur (3a) en communication avec l'enceinte à vide très poussé par le biais de l'ouverture d'accès (2a),
une colonne porte-échantillons (4) fixée à la base distale (1b) et qui traverse l'espace intérieur (3a) de l'élément à soufflet (3), laquelle colonne porte-échantillons est dimensionnée pour s'étendre à travers la base proximale (1a) et l'ouverture d'accès (2a) vers l'enceinte à vide très poussé,
un système de déplacement pour déplacer la base distale (1b) par rapport à la base proximale,
où
le système de déplacement comprend six actionneurs (5) actionnés chacun par des moteurs électriques (6) respectifs, lesquels actionneurs sont disposés radialement autour de l'élément à soufflet (3) et sont reliés de manière articulée à la base proximale (1a) au moyen de joints à rotule proximaux (7) respectifs et sont reliés à la base distale (1b) de manière articulée au moyen de joints à rotule distaux (8) respectifs,
et où
l'élément à soufflet (3) comprend un soufflet à vide comprenant des convolutions.

2. Manipulateur selon la revendication 1, **caractérisé en ce que** les joints à rotule proximaux (7) sont disposés radialement en des points radiaux situés plus à l'extérieur que les joints à rotule distaux (8).

3. Manipulateur selon la revendication 1 ou 2, **caractérisé en ce que**
le système de déplacement comprend trois paires d'actionneurs (5) disposés autour de l'élément à soufflet (3) ;
les actionneurs (5) de chaque paire d'actionneurs (5) sont reliés à la base proximale (1a) de manière articulée par le biais d'une paire de joints à rotule proximaux (7) séparés l'un de l'autre par une première distance angulaire et à la base distale (1b) par une paire de joints à rotule distaux (8) séparés l'un de l'autre par une seconde distance angulaire, qui est supérieure à la première distance angulaire.

4. Manipulateur selon la revendication 3, **caractérisé en ce que** les actionneurs (5) de chaque paire d'actionneurs (5) sont couplés l'un à l'autre par une tige de connexion anti-rotation (9).

5. Manipulateur selon la revendication 4, **caractérisé en ce que**
la base distale (1b) comprend une périphérie extérieure avec trois ailes (1c) saillant radialement et angulairement équidistantes les unes des autres ;
les actionneurs (5) de chaque paire d'actionneurs sont reliés de manière articulée à l'une des trois ailes (1c) au moyen d'une paire de joints à rotule distaux (8).

6. Manipulateur selon l'une quelconque des revendications 1 à 5, **caractérisé en ce qu'il** comprend une bride d'adaptation annulaire (10) qui est ancrée à la base proximale annulaire (1a) et qui peut être ancrée autour de l'ouverture d'accès (2a) du réservoir (2).

7. Manipulateur selon l'une quelconque des revendications 1 à 6, **caractérisé en ce que** l'élément à soufflet (3) comprend une bride annulaire proximale (3b) reliée à la base proximale (1a) et une bride annulaire distale (3c) reliée à la base distale (1b).

8. Manipulateur selon la revendication 7, **caractérisé en ce que** la bride annulaire proximale (3b) a un diamètre proximal plus grand que la bride annulaire distale (3c).

9. Manipulateur selon la revendication 8, **caractérisé en ce que**
l'élément à soufflet (3) comprend une partie proximale (3d) reliée à la bride annulaire proximale (3b) et une partie distale (3e) reliée à la bride annulaire distale (3c) ;
la partie proximale (3d) et la partie distale (3e) de l'élément à soufflet sont reliées l'une à l'autre au moyen d'une bague de séparation (11).

10. Manipulateur selon la revendication 9, **caractérisé en ce que**
la bague de séparation (11) comprend une section annulaire proximale (11a) reliée à la partie proximale (3d) de l'élément à soufflet (3) et une section annulaire distale (11b) reliée à la partie distale (3e) de l'élément à soufflet (3) ;
la section annulaire proximale (11a) a un diamètre plus grand que la section annulaire distale (11b).

11. Manipulateur selon la revendication 8, 9 ou 10, **caractérisé en ce que** l'élément à soufflet (3) est au moins en partie tronconique.

12. Manipulateur selon l'une quelconque des revendications 8 à 11, **caractérisé en ce que** la bague de séparation (11) et la bride proximale (3b) de l'élément à soufflet (3) sont reliées l'une à l'autre au moyen d'une pluralité de ressorts (11c) conçus pour assurer une séparation minimale entre la bague de séparation (11) et la bride proximale (3b),

13. Manipulateur selon l'une quelconque des revendications précédentes, **caractérisé en ce que** la base distale (1b) comprend une ouverture centrale (1f) et la colonne porte-échantillons (4) est reliée à une plaque de serrage (4a) montée sur la base distale (1b) en vue de sceller ladite ouverture centrale (1f).

14. Manipulateur selon l'une quelconque des revendications précédentes, **caractérisé en ce que**
chaque joint à rotule proximal (7) comprend un palier sphérique proximal (7a) disposé sur la base proximale (1a) et un élément de tête sphérique proximal (7b) monté sur l'un des actionneurs (5) ; chaque joint à rotule distal (8) comprend un palier sphérique distal (8a) disposé sur la base distale (1b) et un élément de tête sphérique distal (8b) monté sur cet actionneur (5).

15. Manipulateur selon la revendication 14, **caractérisé en ce que** chaque actionneur (5) comprend
un moteur électrique (6) avec un arbre d'entraînement (6a) relié à un réducteur (12), une vis à billes (13) couplée du côté proximal au réducteur (12), et un écrou fixe distal (14) sur lequel tourne la vis à billes (13) ;
un corps creux mobile extérieur (15) ayant un passage intérieur axial (15a) dans lequel l'écrou fixe (14) est immobilisé, une extrémité distale (15b) sur laquelle est monté l'élément de tête sphérique distal (8b), et une extrémité proximale ouverte (15c) ;
un corps creux fixe intérieur (16) inséré au moins partiellement dans le passage intérieur axial (15a) du corps mobile extérieur (15), avec une extrémité proximale (16a) sur laquelle est montée la tête sphérique proximale (8b), une extrémité distale (16b) faisant face à l'écrou fixe (14), et une cavité axiale (16c) qui s'étend entre l'extrémité proximale et l'extrémité distale du corps intérieur creux, et sur laquelle sont montés le moteur électrique (6) et le réducteur (12) ;
et **en ce que** le corps mobile extérieur (15) peut coulisser axialement sur le corps mobile intérieur (16) sur des rails de guidage longitudinaux (17), entre une position déployée et une position rétractée par action de la vis à billes (13) qui, lorsqu'elle tourne, déplace l'écrou fixe (14) qui tire le corps mobile extérieur (15).
